# EUROPEAN PATENT APPLICATION

(11) **EP 1 538 845 A2**
(43) Date of publication of application: **08.06.2005**
(21) Application number: 04257361.8
(22) Date of filing: 26.11.2004
(51) Int. Cl.: H04N 7/26, H04N 5/44, H04N 5/783

(54) **Apparatus and method for moving picture reproduction using past image buffering**

(30) Priority: 01.12.2003 JP 2003402281
(71) Applicant: Sony Computer Entertainment Inc., Tokyo, 107-0062 (JP)
(72) Inventor: Kake, Tomokazu, c/o Sony Computer, Minato-ku Tokyo 107-0062 (JP); Ohba, Akio, c/o Sony Computer, Minato-ku Tokyo 107-0062 (JP); Suzuki, Akira, c/o Sony Computer, Minato-ku Tokyo 107-0062 (JP)
(74) Representative: Turner, James Arthur

(57) **Abstract**

An image processing apparatus (10) capable of obtaining a novel image. An image input unit (12) acquires a plurality of frames constituting a moving image, and stores them into an image buffer (14). A processing execution unit (16) reads frames to be reproduced from the image buffer (14) as reproduction targets. An image conversion unit (18) applies image processing to the frames to be reproduced. An image output unit (20) outputs the frames to a monitor (24). A buffer adjusting unit (22) stores the reproduced frames into the image buffer (14) as past frames, and drops some of the frames at predetermined time intervals.

## Description

The present invention relates to an image processing method and an image processing apparatus.

With remarkable development of computer technologies in recent years, the image processing capabilities of computers have improved significantly. Even personal computers (PCs) and game machines intended for consuming public have become easily capable of various types of processing which used to be performed by high end machines such as an image processing workstation. Besides, digital versatile discs (DVDs) have found wide use currently not only because of the prevalence of dedicated players and recorders, but largely because of incorporation into PCs and game machines.

The improved image processing capabilities provide the PCs and game machines with new applications from a different angle than heretofore. That is, various tools for moving-image reproduction, moving-image editing, authoring, and the like intended for use by consuming public have become available at lower prices. The use of these tools allows special modes of reproduction, and makes it possible for nonprofessionals to process moving images handily with simple operations. Under the circumstances, the inventor has sought for a revolutionary technique of image processing by which moving images can be reproduced or processed more easily, even into novel images.

The present invention has been achieved by the inventor on the basis of the foregoing understanding, and embodiments of the invention could be used to obtain novel images.

An image processing apparatus according to one of the aspects of the present invention comprises: an image input unit which acquires a plurality of frames constituting moving image data in succession, the frames being ordered in a time series; an image buffer which stores the plurality of acquired frames temporarily; a processing execution unit which reads the plurality of frames from the image buffer in succession, and subjects the read frames to reproduction processing; and a buffer adjusting unit which erases at least some of the plurality of frames subjected to the reproduction processing from the image buffer by dropping them at predetermined time intervals after the reproduction processing.

The image processing apparatus of this aspect makes some of the frames subjected to the reproduction processing remain in the image buffer. The remaining frames can thus be reused as past frames. This image processing apparatus makes not all the frames remain in the image buffer, but those undropped frames alone. The image buffer is thus prevented from being much occupied. This image processing apparatus can play the remaining frames reversely, and even apply special image processing to newest frames based on the result of comparison between the remaining frames and the newest frames.

The buffer adjusting unit may erase some of the plurality of frames subjected to the reproduction processing from the image buffer so that temporally older frames remain with longer time intervals therebetween. In this case, the remaining frames can be played reversely to provide a novel image such that the temporal speed accelerates retrospectively. Moreover, it is possible to make yet older frames remain without occupying the image buffer much.

Another aspect of the present invention provides an image processing apparatus. This apparatus comprises: an image input unit which acquires a plurality of frames constituting moving image data in succession, the frames being ordered in a time series; an image buffer which stores the plurality of acquired frames temporarily; a processing execution unit which reads the plurality of frames from the image buffer in succession, and subjects the read frames to reproduction processing; and a buffer adjusting unit which compresses at least some of the plurality of frames subjected to the reproduction processing, by using either of an intra-frame compression method and an inter-frame compression method after the reproduction processing, and preserves the resultant in the image buffer.

The image processing apparatus of this aspect makes some of the plurality of frames subjected to the reproduction processing remain in the image buffer as compressed again. The remaining frames can thus be reused as past frames. Since this image processing apparatus makes the frames subjected to the reproduction processing remain in the image buffer as compressed, the image buffer is prevented from being much occupied. If frames subject to the reproduction processing are intermediate frames of, e.g., a moving image in MPEG (Motion Picture Expert Group) format, the intermediate frames remaining by themselves cannot be decoded without preceding and following key frames. This image processing apparatus may apply intra-frame compression to such intermediate frames so as to allow decoding by themselves, or apply inter-frame compression with other remaining frames so as to allow decoding. This image processing apparatus can play the remaining frames reversely, and even apply special image processing to newest frames based on the result of comparison between the remaining frames and the newest frames.

Still another aspect of the present invention provides an image processing method. This method comprises: acquiring a plurality of frames constituting moving image data in succession, the frames being ordered in a time series; storing the plurality of acquired frames into an image buffer; reading the plurality of frames from the image buffer in succession; subjecting the read frames to reproduction processing; and erasing at least some of the plurality of frames subjected to the reproduction processing from the image buffer by dropping them at predetermined time intervals after the reproduction processing.

The image processing method of this aspect also makes some of the frames subjected to the reproduction processing remain in the image buffer. The remaining frames can thus be reused as past frames. This image processing method makes not all the frames remain in the image buffer, but those undropped frames alone. The image buffer is thus prevented from being much occupied. This image processing method can play the remaining frames reversely, and even apply special image processing to newest frames based on the result of comparison between the remaining frames and the newest frames.

It should be noted that applicable aspects of the present invention also include any combinations of the foregoing components, as well as ones in which the components and expressions of the present invention are replaced among methods, apparatuses, systems, computer programs, recording media containing a computer program, data structures, etc.

The invention will now be described by way of example with reference to the accompanying drawings, throughout which like parts are referred to by like references, and in which:
Fig. 1 is a functional block diagram showing the basic structure of the image processing apparatus according to an embodiment;
Fig. 2 is a diagram schematically showing a plurality of consecutive frames in a time series according to a first embodiment;
Fig. 3 is a flowchart showing the process from the reproduction to the compression of the frames;
Fig. 4 is a diagram schematically showing a plurality of consecutive frames in a time series according to a second embodiment;
Fig. 5 is a diagram schematically showing a plurality of consecutive frames in a time series and changes of the frame configuration over time;
Fig. 6 is a flowchart showing the process from the reproduction to the erasing of frames;
Fig. 7 is a diagram schematically showing a plurality of consecutive frames in a time series according to a third embodiment; and
Fig. 8 is a flowchart showing the process from the reproduction to the erasing of frames.

In the following embodiments, special image processing using past frames is achieved by storing reproduced moving image frames into an image buffer. Not all the past frames are stored into the image buffer, but ones undropped at predetermined frame intervals and/or ones compressed are. This prevents the image buffer from being much occupied even if past frames relatively far back are preserved. The dropping and compression of past frames are analogous to the vagueness and blurredness of human past memory. Then, the embodiments use techniques similar to the sense of human memory.

### (First embodiment)

An image processing apparatus according to a first embodiment compresses and stores past frames into the image buffer. Here, temporally older frames are compressed at higher compression rates.

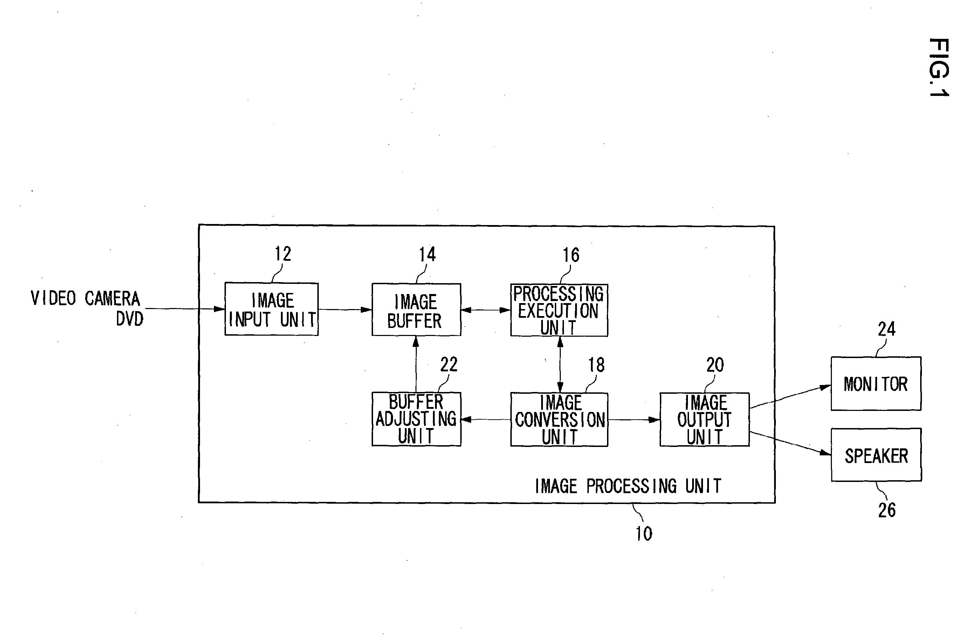

Fig. 1 is a functional block diagram showing the basic structure of the image processing apparatus according to the embodiment. The image processing apparatus 10 comprises an image input unit 12, an image buffer 14, a processing execution unit 16, an image conversion unit 18, an image output unit 20, and a buffer adjusting unit 22. The image processing apparatus 10, in terms of hardware, can be materialized by devices including a CPU of a computer. In terms of software, it can be achieved by a program or the like having data retaining capabilities, image processing capabilities, and drawing capabilities. As will be described below, Fig. 1 shows the functional blocks to be achieved by the cooperation therebetween. These functional blocks can thus be realized in various forms depending on the combination of hardware and software.

The image input unit 12 acquires moving image data captured by a video camera or moving image data stored in a DVD or other recording medium as an original moving image. This moving image data consists of a plurality of frames ordered in a time series, and is compressed in a moving image format such as an MPEG. The plurality of frames included in the original moving image, acquired by the image input unit 12 in succession from the video camera or DVD, are stored into the image buffer 14 temporarily. The image buffer 14 may be a ring buffer which overwrites oldest data successively when fully occupied with write data. The image input unit 12 may be connected with the video camera, in which case the images captured by the video camera are acquired and transferred to the image buffer 14 successively in real time. Incidentally, the image input unit 12 itself may have the capabilities of acquiring moving image data, such as a video shooting function, a DVD reproduction function, and an AD conversion function.

The processing execution unit 16 reads the plurality of frames from the image buffer 14 in succession, and subjects each of the read frames to reproduction processing. Hereinafter, the frame subjected to this reproduction processing will be referred to as "target frame." The processing execution unit 16 decodes the target frame. If the target frame is a key frame, the processing execution unit 16 decodes the target key frame by itself. If the target frame is an intermediate frame, the processing execution unit 16 decodes the target frame with reference to a temporally preceding or following key frame. The image conversion unit 18 applies image processing to the target frame decoded by the processing execution unit 16 based on past frames stored in the image buffer 14. Initially, the image conversion unit 18 determines any of the past frames remaining in the image buffer 14 as the read sources of data (hereinafter, the frames determined as the read sources will be referred to as "read source frames") for respective on-screen positions of the image included in the target frame. As employed herein, the "on-screen positions" may be in units of pixels, or in units of areas each covering a plurality of pixels. That is, the image conversion unit 18 may determine the read source frames pixel by pixel, or area by area.

The image conversion unit 18 may read data corresponding to the on-screen positions from the read source frames, and synthesize the same into the corresponding locations of the target frame. It may combine the read data of the individual on-screen positions into a new frame. Since the data read from different read source frames depending on the respective on-screen positions is synthesized or combined, it is possible to obtain a novel image unlike with.an image that is synthesized from data simply read from an identical past frame.

Which frames for the image conversion unit 18 to read data from may be determined by a variety of methods. In a first determination method, the image conversion unit 18 may determine the read source frames depending on the coordinates of the respective on-screen positions. For example, the image conversion unit 18 may acquire data from different read source frames depending on the horizontal or vertical pixel lines in the frame to be generated by synthesis or combination. When acquiring data from different read source frames depending on the horizontal pixel lines, for example, the image conversion I unit 18 may read data on the upper pixel lines from newer frames and data on the lower pixel lines from older frames.

In a second determination method, the image conversion unit 18 may determine the read source frames depending on attribute values in the respective on-screen positions. As employed herein, the attribute values in the respective on-screen positions refer to parameters such as depth values, the degrees of approximation to a desired image pattern, numerical values indicating the degrees of temporal change of image areas, and pixel values. For example, the image conversion unit 18 may perform the image processing that data on objects farther from the shooting point is acquired from older frames, and the image processing that data on locations more similar to a desired image pattern is acquired from older frames. The image conversion unit 18 may also perform the image processing that data on locations of greater temporal changes is acquired from older frames, and the image processing that data on locations of smaller pixel values is acquired from older frames. The image conversion unit 18 may determine a plurality of past frames as the read source frames, and synthesize the plurality of frames in proportions corresponding to the attribute values in the respective on-screen positions. New frames synthesized or combined through the image processing based on each of the foregoing determination methods form a novel image. Incidentally, if a read source frame determined by the image conversion unit 18 is absent since it has already been erased from the image buffer 14, the image conversion unit 18 may determine a preceding or following frame temporally closest to that position as the read source frame.

The image output unit 20 reproduces the frame formed by synthesis or combination, and successively outputs the resulting video data and audio data to the monitor 24 and the speaker 26, respectively. The buffer adjusting unit 22 compresses the frame subjected to the reproduction processing, by using either of an intra-frame compression method and an inter-frame compression method, and stores the resultant into the image buffer 14 as a remaining frame. Remaining frames may be stored into an area of the image buffer 14 separate from the area where frames yet to be subjected to the reproduction processing are stored. The area for storing the frames yet to be subjected to the reproduction processing and the area for storing the frames already subjected to the reproduction processing may be made of physically different image buffers or memories.

The buffer adjusting unit 22 compresses the plurality of remaining frames stored in the image buffer 14 at respective compression rates. As for the method of compression, the pixel values are averaged in units of several pixels, and the mean values are arranged in matrices to create frames of lower resolutions. The buffer adjusting unit 22 compresses the plurality of remaining frames stored in the image buffer 14 by shrinking the frames to respective resolutions. Here, older frames are shrunk to lower resolutions. This can suppress an increase in the amount of data even if the number of past frames to be stored into the image buffer 14 increases. Moreover, such compression techniques as JPEG may be adopted to increase the compression rates of older frames or reduce the numbers of colors of older frames.

### I

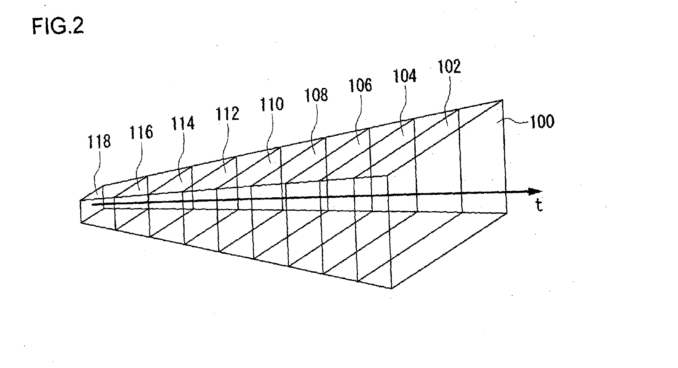

Fig. 2 schematically shows a plurality of consecutive frames in a time series according to the first embodiment. The frame 100 is the newest frame, and the frames 102, 104, 106, 108, 110, 112, 114, 116, and 118 are in temporally retrospective order. That is, the frame 118 is the oldest frame. As shown in the diagram, the image sizes decrease in retrospective order from the frame 100 to the frame 118. Older frames provide blurred images of rougher qualities, whereas they are particularly useful for applications where high definition is not always required, just as is the case with human memory.

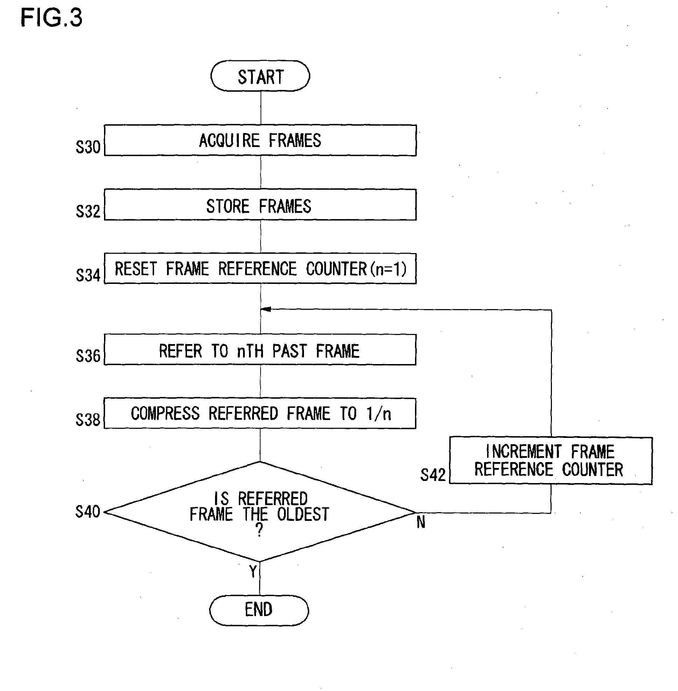

Fig. 3 is a flowchart showing the process from the reproduction to the compression of the frames. Initially, the image input unit 12 acquires a plurality of frames from a video camera, DVD, or the like (S30). The acquired frames are temporarily stored into the image buffer 14 in succession (S32). The buffer adjusting unit 22 resets a frame reference counter value n to 1 (S34). It refers to the frame lying back in the past by n frames (S36), and compresses the referred frame to 1/n (S38). If the referred frame is not the oldest frame stored in the image buffer 14 (N at S40), the frame reference counter n is incremented by one (S42), and the flow returns to S36. If the referred frame is the oldest frame stored in the image buffer 14 (Y at S40), the flow is ended. The foregoing description of S38 has dealt with the processing of shrinking the frame to 1/n. In a modified example, however, the buffer adjusting unit 22 may shrink individual frames at rates that vary quadratically or exponentially.

### (Second embodiment)

### I

An image processing apparatus according to a second embodiment drops past frames and stores past frames left undropped into the image buffer. Here, the dropping is effected so that temporally older frames adjoin with longer time intervals therebetween. The image processing apparatus of the present embodiment has the same components as those shown in Fig. 1. Note that the buffer adjusting unit 22 according to the second embodiment erases some of a plurality of remaining frames stored in the image buffer 14 from the image buffer 14 by dropping them so that the resulting frames are at predetermined time intervals. Moreover, the buffer adjusting unit 22 erases some of the remaining frames from the image buffer 14 so that temporally older frames remain with longer time intervals therebetween. This makes it possible to store yet older frames into the image buffer 14 while suppressing an increase of the remaining frames.

Since older frames adjoin with longer intervals therebetween, the frame intervals increase at an accelerating rate retrospectively. Consequently, when the image conversion unit 18 determines the read source frames according to the first determination method described above, pixel rows closer to the top are read from newer read source frames, and ones closer to the bottom are read from older read source frames. The time intervals between the adjoining pixel rows thus increase toward the bottom. As above, this image processing apparatus 10 makes the reproduced frames remain in the image buffer 14. Image processing using the past frames can thus be applied to newest frames. Moreover, the frames to remain in the image buffer 14 are obtained as a result of dropping at some time intervals, and thus less occupy the image buffer 14. Since older frames adjoin with longer intervals therebetween, it is possible to store yet older frames over a longer period without occupying the image buffer 14 much. Consequently, it is possible to obtain a novel image using yet older frames.

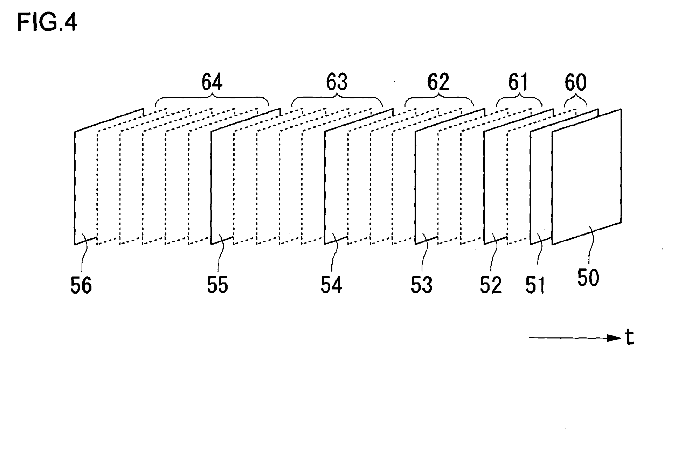

Fig. 4 is a diagram schematically showing a plurality of consecutive frames in a time series according to the second embodiment. In the diagram, the right side represents the present, and the left side the past. A target frame 50 is the newest frame to be reproduced at present. Remaining frames 51, 52, 53, 54, 55, and 56 lying on the left of the target frame 50 are reproduced past frames. In the stage prior to the reproduction of the moving image, the remaining frames 51, 52, 53, 54, 55, and 56 have sandwiched erased frames 60, 61, 62, 63, and 64 therebetween, which have been erased after the reproduction of the moving image. In the diagram, the erased frames 60, 61, 62, 63, and 64 are shown in broken lines, which indicate that these frames are already erased and that they used to exist as ordinary frames before the reproduction of the moving image.

The remaining frame 51 has been just reproduced, and thus has no erased frame to sandwich with the target frame 50 yet. The remaining frame 51 and the remaining frame 52 sandwich the erased frame 60 which has already been erased. The remaining frames 52 and the remaining frames 53 sandwich more erased frames 61 than the erased frame 60. The remaining frames 53 and the remaining frames 54 sandwich even more erased frames 62 than the erased frames 61. The remaining frames 54 and the remaining frames 55 sandwich more erased frames 63 than the I erased frames 62. The remaining frames 55 and the remaining frames 56 sandwich more erased frames 64 than the erased frames 63. In this way, the numbers of erased frames increase retrospectively from the present to the past. The temporal distances between remaining frames thus increase retrospectively from the present to the past. The diagram schematically shows the situation where the numbers of erased frames increase linearly like one, two, three, ... from the present to the past. The increases in the number of erased frames need not be linear, however.

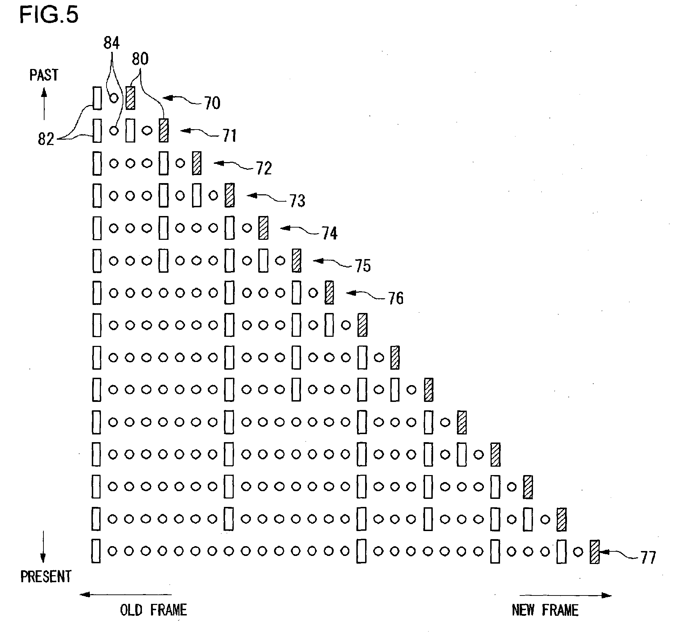

Fig. 5 schematically shows a plurality of consecutive frames in a time series and changes of the frame configuration over time. The horizontal direction of the diagram indicates the arrangement of a plurality of remaining frames stored in the image buffer 14. Temporally newer frames are shown to the right, and temporally older frames are shown to the left. The vertical direction of the diagram indicates a lapse of time. The frame configurations inside the image buffer 14 in the past are shown to the top, and the frame configuration inside the image buffer 14 at the present is shown at the bottom. In the diagram, the numbers of remaining frames in the image buffer 14 increase downward, i.e., with a lapse of time. For example, in the state 70 shown at the top, three reproduced frames are stored in the image buffer 14. At this point of time, one frame to come between the rightmost target frame 80 and the third frame from the right is erased.

In the diagram, reproduced frames are added by two on the right side on each progression downward. In the state 71 where two reproduced frames are added from the state 70, one frame to come between the rightmost target frame 80 and the third frame from the right is erased further. The remaining frames are the first, third, and fifth alone. In the state 72 with two more reproduced frames, one frame to come between the rightmost target frame 80 and the third frame from the right, and the fifth frame from the right are erased further. The remaining frames are the first, third, and seventh alone. In this state 72, the number of erased frames between the third and seventh frames is greater than the number of erased frames between the first and third frames. In other words, older frames are dropped in larger blocks.

In the state 73 with two more reproduced frames, one frame to come between the rightmost target frame 80 and the third frame from the right is erased further. The remaining frames are the first, third, fifth, and ninth alone. In this state 73, the number of erased frames between the fifth and ninth frames is greater than the numbers of erased frames among the first, third, and fifth frames. In other words, older frames are dropped in larger blocks. In the state 74 with two more reproduced frames, one frame to come between the rightmost target frame 80 and the third frame from the right, and one frame to come between the third and seventh right frames from the right are erased further. The remaining frames are the first, third, seventh, and eleventh alone.

Now, focus attention on the numbers of remaining frames. The numbers of remaining frames do vary like two in the state 70, three in the state 71, three in the state 72, four in the state 74, five in the state 75, and four in the state 76, whereas they do not increase much. Even in the state 77 shown at the bottom, the number of remaining frames is five. Since remaining frames are thus dropped as needed, it is possible to preserve older frames while suppressing the number to a minimum. Incidentally, if pixel values of a remaining frame vary from those of an adjoining frame beyond a predetermined threshold, the erasing of the remaining frame may be disabled irrespective of the erasing rule described above. Missing information can be reduced thus.

As described above, the buffer adjusting unit 22 erases a past frame(s) newly each time two reproduced frames are added, thereby dropping remaining frames so that older frames adjoin with more erased frames therebetween. Consequently, it is possible to preserve yet older frames without much increasing the total number of remaining frames.

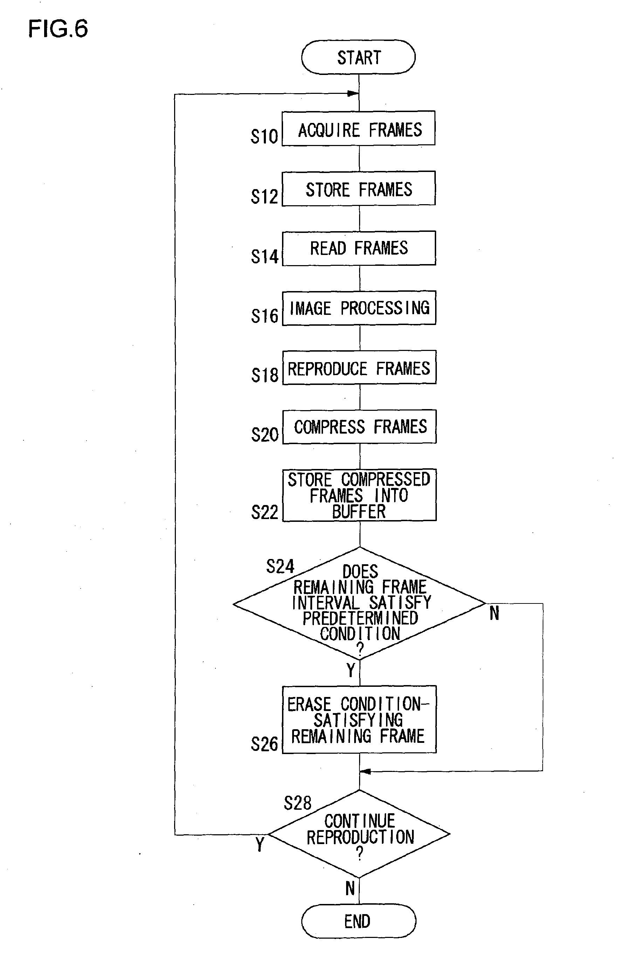

Fig. 6 is a flowchart showing the process from the reproduction to the erasing of frames. Initially, the image input unit 12 acquires a plurality of frames from a video camera, DVD, or the like (S10). The acquired frames are temporarily stored into the image buffer 14 in succession (S12). The processing execution unit 16 reads frames to be reproduced from the image buffer 14 in succession (S14). The image conversion unit 18 applies necessary image processing to the read frames (S16). The image output unit 20 outputs the frames to the monitor 24 for reproduction (S18). The buffer adjusting unit 22 compresses the reproduced frames (S20), and stores the compressed frames into the image buffer 14 (S22). If any of the frames stored in the image buffer 14 have a frame interval that satisfies a predetermined condition as to whether or not to erase (Y at S24), the condition-satisfying remaining frame(s) is/are erased from the image buffer 14 (S26). If none of the remaining frames has an interval satisfying the predetermined condition with an adjoining frame (N at S24), step S26 is skipped so as not to erase any of the remaining frames. If the reproduction is to be continued on (Y at S28), the flow returns to S10 to repeat the processing of S10 to S28. If the reproduction is not to be continued (N at S28), the flow is ended.

### (Third embodiment)

The image processing apparatus according to a third embodiment drops past frames stored in the image buffer while determining time intervals between the frames depending on the degrees of temporal change. The image processing apparatus of the present embodiment has the same components as those shown in Fig. 1. Note that the buffer adjusting unit 22 compares pixel values between adjoining frames, and provides a shorter time interval between the frames if the pixel values have greater differences and provides a longer time interval between the frames if the pixel values have smaller differences.

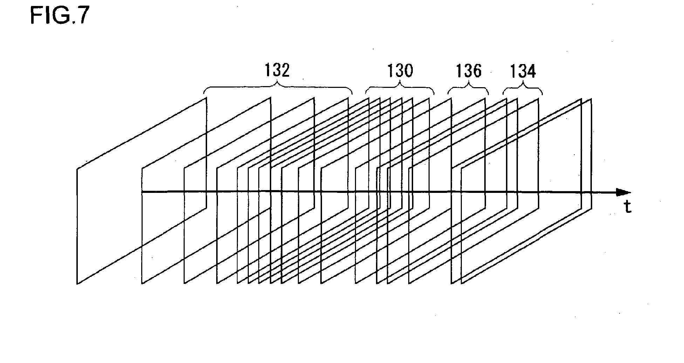

Fig. 7 is a diagram schematically showing a plurality of consecutive frames in a time series according to the third embodiment. The buffer adjusting unit 22 of the present embodiment compares, for example, adjoining frames in blocks of several pixels, thereby obtaining differences between the averages of the pixel values as the differences between the blocks. The results of comparison between the entire frames are thus calculated, and whether or not to erase either one of the frames is determined based on the calculations. In a frame group 132 and a frame group 136 which include a plurality of frames of smaller changes, many of the frames are dropped. In a frame group 130 and a frame group 134 which include a plurality of frames of greater changes, not many are dropped. Consequently, it is possible to store old frames into the image buffer 14 while reducing missing information.

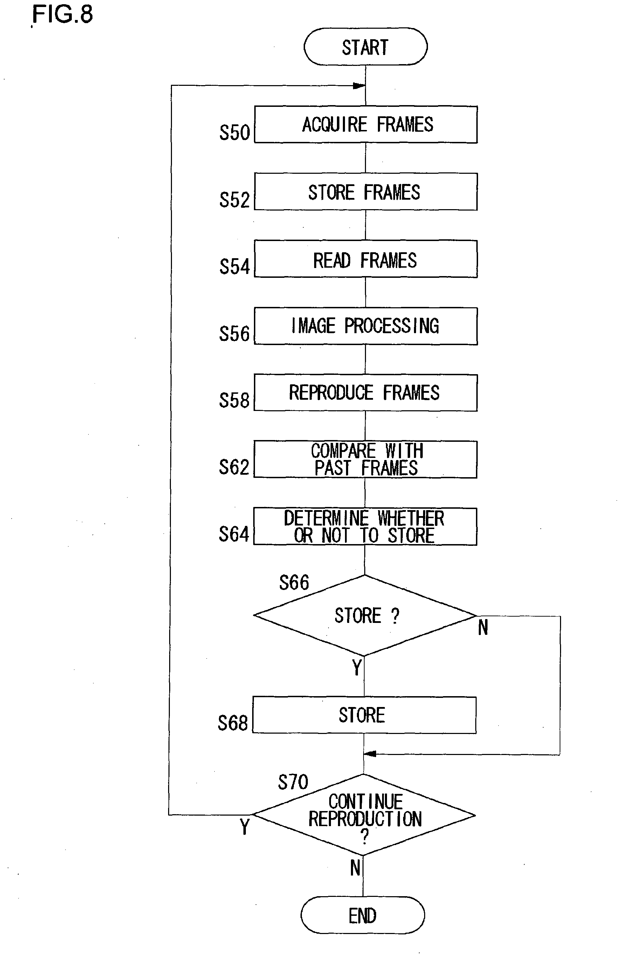

Fig. 8 is a flowchart showing the process from the reproduction to the erasing of frames. The processing of S50 to S58 is the same as that of S10 to S18 in Fig. 6. After the processing of S58, the buffer adjusting unit 22 compares the past frame that has been stored into the image buffer 14 immediately before and the frames reproduced (S62). Based on the result of comparison, or the degrees of change, the buffer adjusting unit 22 determines whether or not to store the reproduced frames into the image buffer 14. If it is determined to store (Y at S66), the reproduced frames are stored into the image buffer 14 (S68). If it is determined not to store (N at S66), step S68 is skipped. If the reproduction is to be continued on (Y at S70), the flow returns to S50 to repeat the processing of S50 to S70. If the reproduction is not to be continued (N at S70), the flow is ended.

Up to this point, the present invention has been described in conjunction with the embodiments thereof. These embodiments are given solely by way of illustration. It will be understood by those skilled in the art that various modifications may be made to combinations of the foregoing components and processes, and all such modified examples are also intended to fall within the scope of the present invention. The following provides some of the modified examples.

The embodiments have dealt with the cases where the remaining frames stored in the image buffer 14 are used as referential frames for image processing. In a modified example, the remaining frames stored in the image buffer 14 may be used for purposes other than the referential frames for image processing.

The second embodiment has dealt with the configuration that past frames to be stored into the image buffer 14 are dropped at predetermined intervals. In a modified example, aside from the dropping of past frames, the resolutions of the frames may be lowered to reduce the amount of data. In this case, older frames may be given lower resolutions.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An image processing apparatus (10) comprising:
an image input unit (12) which acquires a plurality of frames constituting moving image data in succession, the frames being ordered in a time series;
an image buffer (14) which stores the plurality of acquired frames temporarily;
a processing execution unit (16) which reads the plurality of frames from the image buffer (14) in succession, and subjects the read frames to reproduction processing; and
a buffer adjusting unit (22) which erases at least some of the plurality of frames subjected to the reproduction processing from the image buffer (14) by dropping them at predetermined time intervals after the reproduction processing.

2. The image processing apparatus (10) according to claim 1, wherein
the buffer adjusting unit (22) erases some of the plurality of frames subjected to the reproduction processing from the image buffer (14) so that temporally older frames remain with longer time intervals therebetween.

3. The image processing apparatus (10) according to claim 2, wherein
the buffer adjusting unit (22) compresses the remaining frames by using either of an intra-frame compression method and an inter-frame compression method, and preserves the resultant in the image buffer (14).

4. The image processing apparatus (10) according to any one of claims 1 to 3, further comprising:
an image conversion unit (18) which determines any of the frames remaining in the image buffer (14) as read source frames for respective on-screen positions of an image included in a target frame to be subjected to the reproduction processing, and reads data corresponding to the on-screen positions from the determined read source frames and synthesizes the data; and
an image output unit (20) which outputs frames reconstructed by the synthesis in succession.

5. The image processing apparatus (10) according to claim 4, wherein
the image conversion unit (18) determines the read source frames depending on the coordinates of the respective on-screen positions.

6. The image processing apparatus (10) according to claim 4, wherein
the image conversion unit (18) determines the read source frames depending on attribute values in the respective on-screen positions.

7. The image processing apparatus (10) according to claim 4, wherein
the image conversion unit (18) determines a plurality of frames as the read source frames, and synthesizes the plurality of frames in proportions corresponding to attribute values in the respective on-screen positions.

8. The image processing apparatus (10) according to claim 4, wherein
the image conversion unit (18) adds predetermined pixel values depending on attribute values in the respective on-screen positions of the image included in the target frame.

9. The image processing apparatus (10) according to claim 4, wherein
the image conversion unit (18) applies visual effects depending on attribute values in the respective on-screen positions of the image included in the target frame.

10. The image processing apparatus (10) according to any one of claims 6 to 9, wherein
the attribute values are depth values.

11. The image processing apparatus (10) according to any one of claims 6 to 9, wherein
the attribute values are the degrees of approximation to a desired image pattern.

12. The image processing apparatus (10) according to any one of claims 6 to 9, wherein
the attribute values are numerical values indicating the degrees of temporal change of an image area.

13. The image processing apparatus (10) according to any one of claims 6 to 9, wherein
the attribute values are pixel values.

14. The image processing apparatus (10) according to any one of claims 1 to 13, wherein
the image input unit (12) is connected with a camera, and acquires images captured by the camera in succession and transmits the images to the image buffer (14).

15. An image processing apparatus (10) comprising:
an image input unit (12) which acquires a plurality of frames constituting moving image data in succession, the frames being ordered in a time series;
an image buffer (14) which stores the plurality of acquired frames temporarily;
a processing execution unit (16) which reads the plurality of frames from the image buffer (14) in succession, and subjects the read frames to reproduction processing; and
a buffer adjusting unit (22) which compresses at least some of the plurality of frames subjected to the reproduction processing, by using either of an intra-frame compression method and an inter-frame compression method after the reproduction processing, and preserves the resultant in the image buffer (14).

16. An image processing method comprising:
acquiring a plurality of frames constituting moving image data in succession, the frames being ordered in a time series;
storing the plurality of acquired frames into an image buffer (14);
reading the plurality of frames from the image buffer (14) in succession;
subjecting the read frames to reproduction processing; and
erasing at least some of the plurality of frames subjected to the reproduction processing from the image buffer (14) by dropping them at predetermined time intervals after the reproduction processing.

17. The image processing method according to claim 16, wherein
the erasing includes erasing some of the plurality of frames subjected to the reproduction processing from the image buffer (14) so that temporally older frames remain with longer time intervals therebetween.

18. A computer program for making a computer execute:
acquiring a plurality of frames constituting moving image data in succession, the frames being ordered in a time series;
storing the plurality of acquired frames into an image buffer (14);
reading the plurality of frames from the image buffer (14) in succession;
subjecting the read frames to reproduction processing; and
erasing at least some of the plurality of frames subjected to the reproduction processing from the image buffer (14) by dropping them at predetermined time intervals after the reproduction processing.

19. A computer-readable recording medium containing a computer program for making a computer execute:
acquiring a plurality of frames constituting moving image data in succession, the frames being ordered in a time series;
storing the plurality of acquired frames into an image buffer (14);
reading the plurality of frames from the image buffer (14) in succession;
subjecting the read frames to reproduction processing; and
erasing at least some of the plurality of frames subjected to the reproduction processing from the image buffer (14) by dropping them at predetermined time intervals after the reproduction processing.
